Europäisches Patentamt

European Patent Office

Office européen des brevets

(19)

(11) Veröffentlichungsnummer: **0 004 036**
**B1**

(12) **EUROPÄISCHE PATENTSCHRIFT**

(45) Veröffentlichungstag der Patentschrift: **23.12.81**

(21) Anmeldenummer: **79100609.1**

(22) Anmeldetag: **01.03.79**

(51) Int. Cl.³: **G 01 B 5/00,** G 01 B 11/30,
H 01 L 21/66, H 01 L 21/68

(54) Ebenheitsmessvorrichtung.

(30) Priorität: **10.03.78 DE 2810512**

(43) Veröffentlichungstag der Anmeldung:
**19.09.79 Patentblatt 79/19**

(45) Bekanntmachung des Hinweises auf die Patenterteilung:
**23.12.81 Patentblatt 81/51**

(84) Benannte Vertragsstaaten:
**CH FR GB IT NL**

(56) Entgegenhaltungen:
**DE - A - 1 673 878**
**DE - A - 2 604 407**
**DE - A - 2 705 092**
**GB - A - 1 435 513**
**US - A - 3 891 320**

**MICROELECTRONICS JOURNAL, volume 9, no.
3, Januar/Februar 1979, LUTON (GB)
D. GUIDICI: "Wafer flatness: measurement
considerations and equipment correlation",
Seiten 31—36**

(73) Patentinhaber: **SIEMENS AKTIENGESELLSCHAFT
Berlin und München
Postfach 22 02 61
D-8000 München 22 (DE)**

(72) Erfinder: **Dreisbach, Bodo, Dipl.-Ing.
Osterleite 21
D-8170 Bad Tölz (DE)**
Erfinder: **Eidling, Karl
Ergertshausen 1b
D-8195 Egling 1 (DE)**

Ebenheitsmeßvorrichtung

Die Erfindung betrifft eine Ebenheitsmeßvorrichtung für dünne, steife Scheiben, insbesondere Silizium-Scheiben, die an einer Platte mit Ansaugkanälen und einer Vakuumbohrung angesaugt sind oder frei auf dieser aufliegen, mit mindestens einem Interferometer mit einer Referenzplatte zur Ebenheitsmessung. Derartige Ebenheitsmeßvorrichtungen werden von der Firma Transintop GmbH für Aeroptik & Optronik, 7771 Frickingen 2, angeboten und vertrieben. Bei diesen Vorrichtungen war die Unebenheit der Ansaugplatte bei einem Durchmesser von 3″ größer als 1,5 $\mu$m.

Zum Prüfen und Aussortieren von SiliziumScheiben mit einer Ebenheit < 6 $\mu$m müssen diese im rückseitig angesaugten Zustand vermessen werden. Die Meßgenauigkeit muß $\leq$ 1 $\mu$m sein und erfordert deshalb eine Ansaugplatte, die ebener als 0,5 $\mu$m ist.

Bisher waren Silizium-Scheiben mit einer Ebenheit < 6 $\mu$m nicht erhältlich. Die besten Ansaugplatten (Chuck) sind bei einem Durchmesser von 3″ mehr als 1,5 $\mu$m uneben. Der Keilfehlerausgleich erfolgt über Feingewindeschrauben. Ein Schutz gegen Schwingungen zwischen Objektträger und Meßgerät ist nicht bekannt.

Der Erfindung liegt die Aufgabe zugrunde, mit möglichst einfachen Mitteln die Meßgenauigkeit bei der eingangs beschriebenen Ebenheitsmeßvorrichtung zu verbessern. Diese Aufgabe wird dadurch gelöst, daß die Ansaugplatte ebener als 0,2 $\mu$m ist und daß eine Schwenkvorrichtung für das Meßobjekt vorgesehen ist, welche die Ansaugplatte sowie eine damit verbundene Dreipunktauflage aus einstellbaren Punktauflagen zur Anlage an die Referenzplatte trägt, um durch Einstellen der Punktauflagen einen Keilfehler des Objektes kompensieren und beim Verschwenken des Objektes von der genannten Referenzplatte zu jener eines weiteren Interferometers die Keilfehlerkompensation aufrechterhalten zu können. Auf diese Weise wird ein berührungsloses Prüfen und Sortieren von dünnen, planparallelen Scheiben im freiliegenden und rückseitig angesaugten Zustand mit verringerter Messungenauigkeit ermöglicht. Mit diesem Meßaufbau können andersartige Ebenheitsmeßvorrichtungen überprüft und justiert werden.

Bei der Vorrichtung nach der Erfindung besteht die Ansaugplatte vorzugsweise aus Glas, Quarz oder Siliziumoxid. Auf diese Weise bleibt der Meßfehler, der durch das Ansaugen eines Prüflings an die Saugplatte bedingt ist, weit unter der Unebenheit des Prüflings.

Nach einer weiteren Ausgestaltung der Erfindung wird die Ansaugplatte starr mit einer Ausgleichsplatte verbunden und die drei Punktauflagen an der Ausgleichsplatte befestigt, wobei zwei dieser Punktauflagen durch Mikrometerspindeln und eine durch eine Feingewindeschraube gebildet werden. Diese Anordnung ist nicht beschränkt auf ein Meßgerät, da über drei Ausgleichsfedern die Keilfehlerkorrektur mit drei Auflagepunkten unter der Referenzplatte jedes beliebigen Meßgerätes wieder hergestellt wird.

Bei einer besonders zweckmäßigen Ausgestaltung ist die Schwenkvorrichtung in der Höhe einstellbar, ferner um eine vertikale Achse schwenkbar und mit einem Bedienungshebel für die Hubbewegung gleichzeitig auf der Achse klemmbar. Dadurch ist es möglich, verschieden hohe Saugplatten und verschieden dicke Prüflinge zu benutzen. Durch das Klemmen wird ein Verrutschen des Prüflings unter dem Meßgerät während der Prüfung verhindert. Durch die Hubbewegung wird einmal das Beladen der Sauglpatte erleichtert und die Vorspannung der Ausgleichsfedern hergestellt.

Die Erfindung wird an einem Ausführungsbeispiel erläutert.

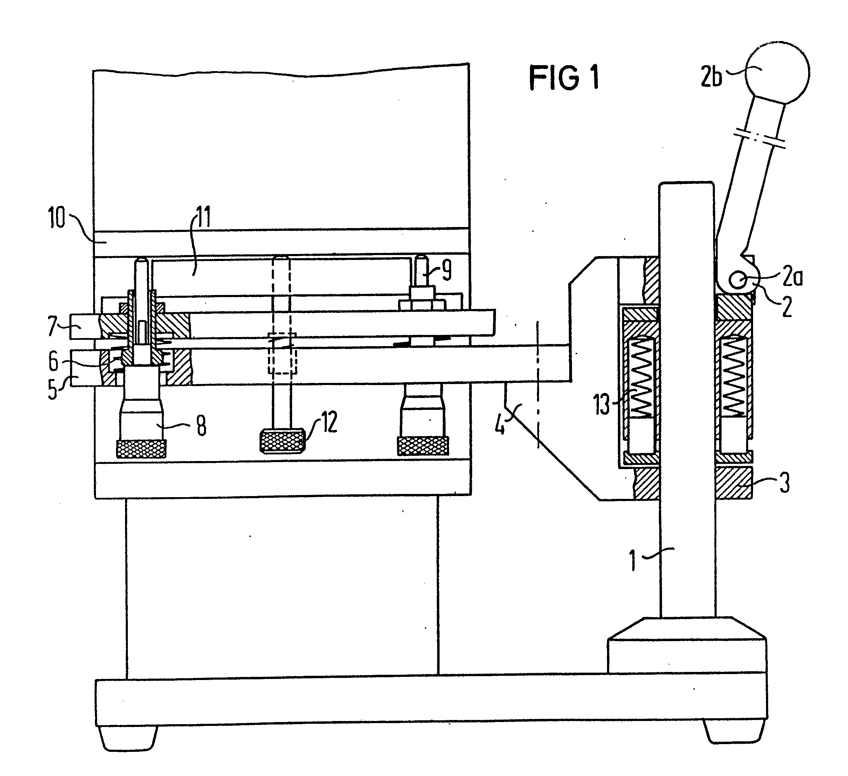

Fig. 1 zeigt eines Ebenheitsmeßvorrichtung in der Vorderansicht und

Fig. 2 die dazugehörende Draufsicht.

Auf einer Säule 1 ist eine über eine Hubnocke 2 anhebbare und klemmbare Einschwenkvorrichtung 3 angeordnet. Die Hubnocke wird um eine Klemmschraube 2a geschwenkt. 2b bezeichnet den Betätigungshebel für die Hubnocke. Auf dem Arm 4 dieser Einschwenkvorrichtung liegt eine Grundplatte 5 auf, in der sich Ausgleichsfedern 6 abstützen. Über dieser Grundplatte 5 ist eine Ausgleichsplatte 7 federnd gelagert. In dieser Ausgleichsplatte sind Mikrometerspindeln 8 so angeordnet, daß mit ihren Abstandsbolzen 9 im beschränkten Bereich beliebige Raumwinkel zwischen Ausgleichsplatte 7 und Referenzplatte 10 des Meßgerätes eingestellt werden können. Die Saugplatte 11 ist starr mit der Ausgleichsplatte 7 verbunden. Ein dritter Abstandsbolzen 12 ist mit einer Feingewindeschraube höhenverstellbar. In der Schwenkvorrichtung 3 ist eine Klemmvorrichtung 13 für die Höhenverstellung integriert.

Die Saugplatte 11 weist Saugkanäle 14 und eine Vakuumbohrung 15 auf.

Zum Beschicken der Saugplatte wird die Grundplatte 5 über die Hubnocke 2 abgesenkt und aus dem Meßgerät geschwenkt.

Ein Silizium-Wafer wird auf den Meßchuck 11 gelegt und durch Unterdruck angesaugt. Die Grundplatte 5 kann daraufhin unter die Referenzplatte 10 des Meßgerätes geschwenkt und mit der Hubnocke 2 angehoben werden. Beim Herunterdrücken des Nockenhebels 2b mit der Mutter 2a wird die Grundplatte auf der Säule 1 gleichzeitig festgeklemmt. Das Absenken des Nockenhebels bewirkt ein Anheben der Grundplatte. Dadurch werden die drei Abstandsbolzen 9 bzw. 12 der Ausgleichsplatte 7 über Schraubenfedern 6 gegen die Referenzplatte 10 gedrückt und somit kraftschlüssig verbunden. Auf diese Weise schwingen Meßgerät und Saugplatte gleichphasig und das Meßergebnis wird von Gebäudeschwingungen nicht mehr beeinflußt. Die kraftschlüssige Verbindung kann statt mit Federn 6 auch mittels Magneten erfolgen.

Bei der Ebenheitsmessung muß die Oberfläche des Silizium-Wafers parallel zur Referenzplatte eingestellt werden (Keilfehlerausgleich). Der Keilfehler ist der Winkel zwischen Prüfling und Referenzplatte. Zum Keilfehlerausgleich kann bei den zwei Abstandsbolzen 9 die Höhe über der Ausgleichsplatte 7 durch Mikrometerspindeln 8, die vorzugsweise mit Differenzgewinde versehen sind, auf 0,5 $\mu$m genau eingestellt werden. Da die Stellung der Abstandsbolzen 9 zur Siliziumscheibe auch beim Absenken der Grundplatte unverändert erhalten bleibt, ist der Keilfehlerausgleich auch dann unverändert, wenn der Meßchuck unter die Referenzplatte eines anderen Meßgerätes geschwenkt wird.

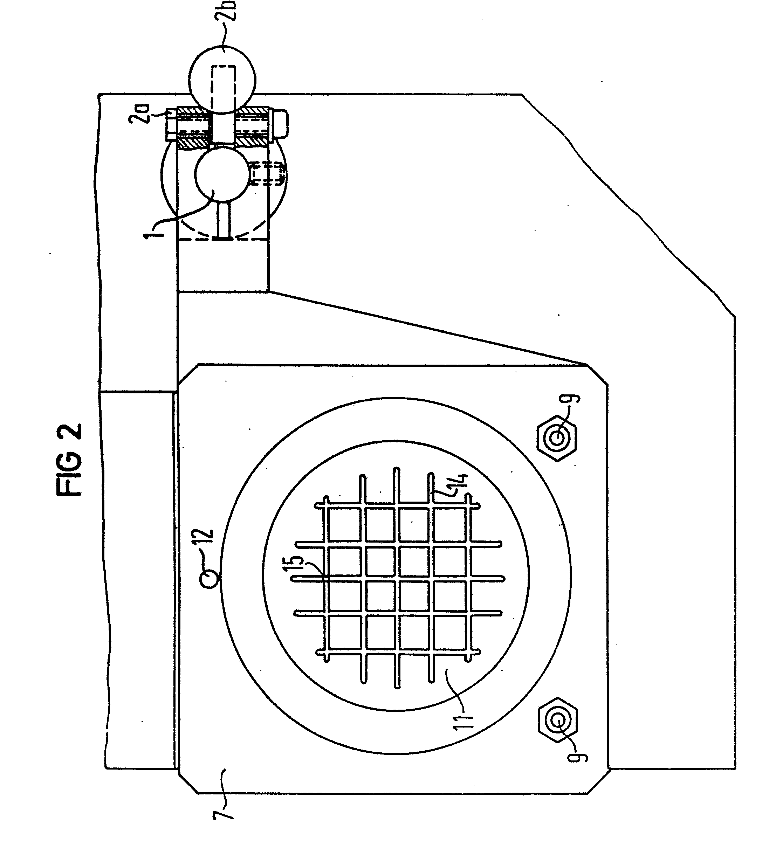

Aus der Fig. 2 ist zu erkennen, daß der Chuck 11 aus Glas oder Quarz mit Vakuumkanälen 14 und einer Vakuumbohrung 15 versehen ist. Ein derartiger Chuck kann mit bekannten, optischen Schleifverfahren auf eine Ebenheit < 0,1 $\mu$m geschliffen und poliert werden.

## Patentansprüche

1. Ebenheitsmeßvorrichtung für dünne, steife Scheiben, insbesondere Silizium-Scheiben, die an einer Platte (11) mit Ansaugkanälen (14) und einer Vakuumbohrung (15) angesaugt sind oder frei auf dieser aufliegen, mit mindestens einem Interferometer mit einer Referenzplatte (10) zur Ebenheitsmessung, dadurch gekennzeichnet, daß die Ansaugplatte (11) ebener als 0,2 $\mu$m ist und daß eine Schwenkvorrichtung (1, 2, 3, 4, 5) für das Meßobjekt vorgesehen ist, welche die Ansaugplatte (11) sowie eine damit verbundene Dreipunktauflage aus einstellbaren Punktauflagen (9, 12) zur Anlage an die Referenzplatte (10) trägt, um durch Einstellen der Punktauflagen einen Keilfehler des Objektes kompensieren und beim Verschwenken des Objektes von der genannten Referenzplatte (10) zu jener eines weiteren Interferometers die Keilfehlerkompensation aufrechterhalten zu können.

2. Vorrichtung nach Anspruch 1, dadurch gekennzeichnet, daß die Ansaugplatte (11) aus Glas, Quarz oder Siliziumoxid besteht.

3. Vorrichtung nach Anspruch 1, dadurch gekennzeichnet, daß die Ansaugplatte (11) starr mit einer Ausgleichsplatte (7) verbunden ist, und daß die drei Punktauflagen an der Ausgleichsplatte (7) befestigt sind, wobei zwei dieser Punktauflagen (9) durch Mikrometerspindeln und eine (12) durch eine Feingewindeschraube gebildet werden.

4. Vorrichtung nach Anspruch 1, dadurch gekennzeichnet, daß die Schwenkvorrichtung (3) in der Höhe einstellbar, ferner um eine vertikale Achse (1) schwenkbar und mit einem Bedienungshebel für die Hubbewegung gleichzeitig auf der Achse klemmbar ist.

## Revendications

1. Instrument de mesure de la planéité de pastilles minces, rigides, notamment de puces de silicium, qui sont aspirées sur un plateau (11) ayant des canaux (14) d'aspiration et un trou (15) à vide ou qui y reposent librement, comprenant au moins un interféromètre ayant un plateau (10) de référence en vue de mesurer la planéité, caractérisé en ce que le plateau (11) d'aspiration a une planéité meilleure que 0,2 $\mu$ et il y a un dispositif (1, 2, 3, 4, 5), qui est destiné à faire pivoter l'objet à mesurer et qui porte le plateau (11) d'aspiration ainsi qu'un appui à trois points solidaire de celui-ci et constitué de deux appuis (9, 12) ponctuels venant en contact avec le plateau (10) de référence afin, en réglant les appuis ponctuels, de compenser un défaut de calage de l'objet et de pouvoir, lorsque l'objet pivote du plateau (10) de référence vers celui d'un autre interféromètre, maintenir la compensation du défaut de calage.

2. Instrument suivant la revendication 1, caractérisé en ce que le plateau (11) d'aspiration est en verre, en quartz ou en oxyde de silicium.

3. Instrument suivant la revendication 1, caractérisé en ce que le plateau (11) d'aspiration est relié rigidement à un plateau (7) d'équilibrage et les trois appuis ponctuels sont fixés au plateau (7) d'équilibrage, deux (9) d'entre eux étant constitués par des broches micrométriques et l'un (12) par une vis à filetage fin.

4. Instrument suivant la revendication 1, caractérisé en ce que le dispositif (3) de pivotement peut être réglé en hauteur et en outre peut pivoter autour d'un axe (1) vertical et peut être en même temps bloqué sur l'axe à l'aide d'un levier pour le mouvement de levage.

## Claims

1. Apparatus for measuring the flatness of thin stiff discs, in particular silicon discs, which are sucked onto a plate (11) by means of suction channels (14) and a vacuum bore (15) or which rest freely on the plate, comprising at least one interferometer having a reference plate (10) for the flatness measurement, characterized in that the suction plate (11) is flatter than 0.2 $\mu$m and that a swivelling device (1, 2, 3, 4, 5) is provides for the object to be measured which swivelling device carries both the suction plate (11) and a three-point support means which is connected thereto and which consists of adjustable point supports (9, 12) for fixing the reference plate (10), in order, by adjusting the point supports, to be able to compensate for a wedge error in the object and to be able to maintain the wedge error compensation when swivelling the object from said reference plate (10) of the reference plate of a further interferometer.

2. Apparatus as claimed in Claim 1, characterised in that the suction plate (11) consists of glass, quartz, or silicon oxide.

3. Apparatus as claimed in Claim 1, characterised in that the suction plate (11) is rigidly connected to a compensating plate (7), and that the three point supports are fixed to the compensating plate (7), two of these point supports (9) being formed by micrometer spindles and one (12) by a fine-thread screw.

4. Apparatus as claimed in Claim 1, characterized in that the swivelling device (3) is adjustable in height and can further be pivoted about a vertical shaft (1) and simultaneously clamped on the shaft by means of a control lever for the raising movement.

FIG 1

FIG 2